# EUROPEAN PATENT SPECIFICATION

(11) **EP 0 755 130 B1**
(45) Date of publication and mention of the grant of the patent: **03.11.2004**
(21) Application number: 96850135.3
(22) Date of filing: 08.07.1996
(51) Int. Cl.: H04B 7/005, H04B 7/06

(54) **Antenna device**
Antennenvorrichtung
Dispositif d'antenne

(30) Priority: 20.07.1995 SE 9502684
(43) Date of publication of application: 22.01.1997
(73) Proprietor: TELIA AB, 126 80 Farsta (SE)
(72) Inventor: Wickman, Johan, 237 35 Bjärred (SE)
(74) Representative: Hopfgarten, Nils

(56) References cited:
- EP-A- 0 419 429
- WO-A-93/20625
- WO-A-95/12927
- GB-A- 2 237 706

## Description

### FIELD OF THE INVENTION

The present invention relates to a device and a method to, in a digital mobile radio communication system which utilizes interleaving with restricted depth of interleaving, reduce the influence of fading.

### PRIOR ART

Fading consists of variations of the signal strength in time or space due to interference between different wave propagation paths and (varying) shadowing of the wave propagation paths.

High influence of fading can reduce the performance of the radio system such as smaller surface coverage, reduced transmission quality and lower capacity.

If no measures are taken at the system construction to reduce the influence of fading, the fading results in an increased cost for the operator if he/she shall be able to offer good surface coverage, high quality and capacity.

Interleaving is a method which is often used in digital radio systems, for instance GSM/DCS1800 and HIPERLAN (High Performance European Radio LAN), to reduce the influence of fading. The method implies that the information that shall be transmitted is spread out in a certain sequence over a certain time (a certain "depth"). At reception the sequence is utilized inversely to again collect the information. In that way, in the case of a short interference only, a smaller part of the information will be disturbed. One also achieves a form of averaging so the different adjacent information packets are disturbed to the same extent, which often is more favourable for the channel coding and the speech coding than that only certain parts are disturbed the more. To achieve a god gain, it is however neccessary that the duration of the disturbance is considerably shorter than the time over which the distribution is made. This condition is however not fulfilled in GSM/DCS1800 respective HIPERLAN for the applications where the user (the terminal) moves slowly, for instance hand-carried terminals which are still or only mowing in walking rate. In these applications the terminal will not have time to move out from the disturbance during the time interval which constitutes the interleaving depth or the distribution time.

For GSM/DCS1800 it is above all the downlink, i.e. the link from the base station to terminal that is critical. This depends on that one in these systems does not have any antenna diversity in the downlink. From a more general point of view one can say that this restriction is valid for all mobile systems the uplink and downlink of which for one and the same communication is uncorrelated regarding the fading, i.e. the base station cannnot, based on measuring of the uplink, predict antenna selection for the downlink.

One more problem for GSM/DCS1800 is that frequency jumps are insufficient in urban environment and indoor environment to increase the interleaving gain. This is due to that feasible jump interval is too small in relation to the correlation bandwidth in these environments.

Finally it should be mentioned that for GSM/DCS1800 one at present has to utilize higher output power in downlink in comparison with uplink, to compensate the lack of antenna diversity in downlink. High base station output power however reduces the system capacity. Further, the important miniaturization of the base stations is made more difficult.

At a preliminary investigation which was performed to find out whether previously technology solves above mentioned problems, the following documents were found.

Document US-A-4 661 993 shows a method to increase performance in a radio system at fading. According to the document either the difference in amplitude or in phase is varied between the antennas. The method is also applicable on the receiver side.

The document GB-A-2 135 544 relates to a variant of the method to vary the amplitude between the antennas. In this document the carrier frequency differs between the two antennas with a few Hz to avoid stationary "dead spots".

The document US-A-3 922 685 combines antenna changing and variation of the phase.

The document FR-A-2 215 759 shows a radio transmitter which successively changes between three antennas. If the speed of the antenna changing is sufficiently high, the probability that a mobile will land up in a "dead point" is reduced.

Document EP-A-568 507 shows a way to reduce the effect of fading by varying the antenna characteristics, i. e. the appearance of the antenna lobe. This is achieved by successively connecting passive antenna elements.

In document US-A-5 267 268 one has reduced the risk for poor reception at fading by step by step vary the polarization of the transmitted signal.

EP-D-0 419 429 discloses a method for reducing the risk of poor reception in a time multiplex radiocommunication system which includes at least one fixed station and at least one mobile station, when transmitting from one of the fixed stations to one of the mobile stations, as a result of reflection of transmitted signals against different objects, respective signals being transmitted from at least two antennas in the fixed station, and the transmitted signals have mutually the same frequency and the same information content, but the phase positions of the signals vary in time in relation to one another.

WO 9 320 625 A discloses a base station for cellular frequency hopping TDMA radio communication system, comprising at least two transmitter groups, each containing at least one transmitter, each connected to an antenna in an antenna group of a cell, and comprising means for controlled frequency hops in at least one TDMA channel, such that the signal bursts thereof are distributed on different antennas within the antenna group.

These documents, however, do not describe any solutions to the above mentioned problems.

### CONCLUSION OF THE INVENTION

The aim with the present invention consequently is to attend to that the duration or period of the fading (the disturbance) is considerably shorter than the time over which the interleaving (the distribution) is made; this is normally not the case in GSM/DCS1800 respective HIPERLAN for the applications where the user of the mobile terminal stands still or moves at walking rate.

One further aim with the present invention is to clear away or minimize the restriction which is valid for all mobile systems the uplink and downlink of which for one and the same communication is uncorrelated with regard to fading. For GSM/DCS1800 this is due to that one does not have any antenna diversity in the downlink.

One more aim with the present invention is that one in GSM/DCS1800 clears away the problems of increasing output power in downlink compared with uplink to compensate for lack of antenna diversity in downlink, which results in higher system capacity and besides facilitates for the important miniaturization of the base stations.

These aims are achieved by devices and methods according to the present invention which, in a digital mobile radio communication system utilizing interleaving with restricted interleaving depth, generate fading so that the period of the generated fading in combination with the not generated fading becomes considerably shorter than the interleaving depth.

### SHORT DESCRIPTION OF THE DRAWINGS

The present invention will now be described in more details with references to the enclosed drawings.
Figure 1 shows example of how fading has been generated in b) compared with a).
Figure 2 shows a device according to the invention for transmission /reception where both amplitude and phase are varied.
Figure 3 shows a device according to the invention for transmission/reception where only the amplitude is varied.

### DETAILED DESCRIPTION OF EMBODIMENTS OF THE INVENTION

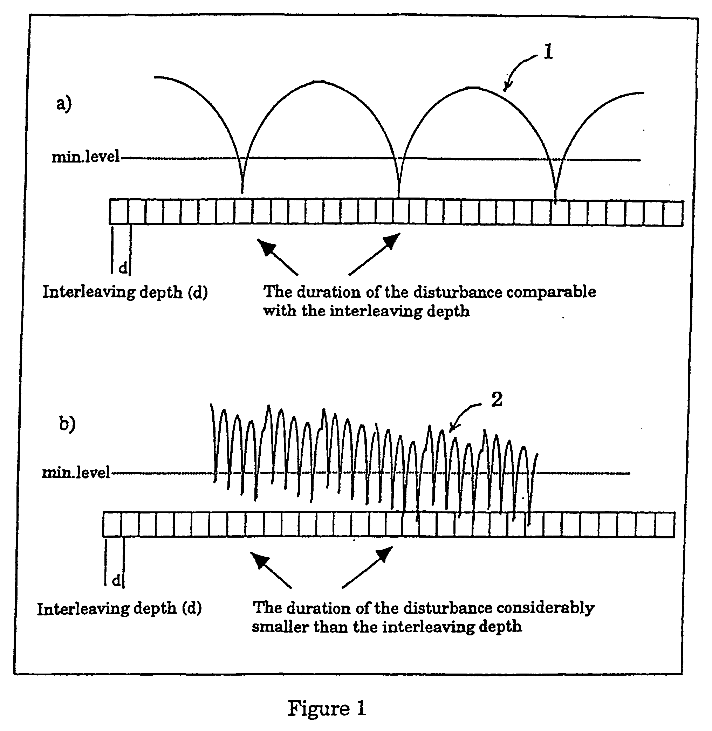

The invention relates to devices and methods to reduce the influence of fading over a digital mobile radio communication as defined in the enclosed indepedent claims, which utilize interleaving with restricted interleaving depth, at which the devices generate fading so that the period time for the generated fading in combination with the not generated fading becomes considerably shorter than the interleaving depth (see Figure 1).

Figure 1a shows a system where the time period for the fading 1 (the disturbance) is much longer than the interleaving depth (d). This situation is very unfavourable at applications where the user (the mobile terminal) stands still or is moving slowly; the user will not have time to move out from the disturbance during the time interval which constitutes the interleaving depth (the distribution time), which results in that the quality of the received signal becomes poor. Fiqure 1b, on the other hand, shows a system where fading has been generated and combined with the previous fading 1. By that the fading is shortened and concentrated, at which the interleaving depth is increased in relation to the duration of the fading dips (the disturbances); this created interference fading 2 consequently has a higher frequency and a much shorter period time than the previous fading 1. In this case the user of the mobile terminal will have time to move out from the disturbance during the time interval which constitutes the interleaving depth.

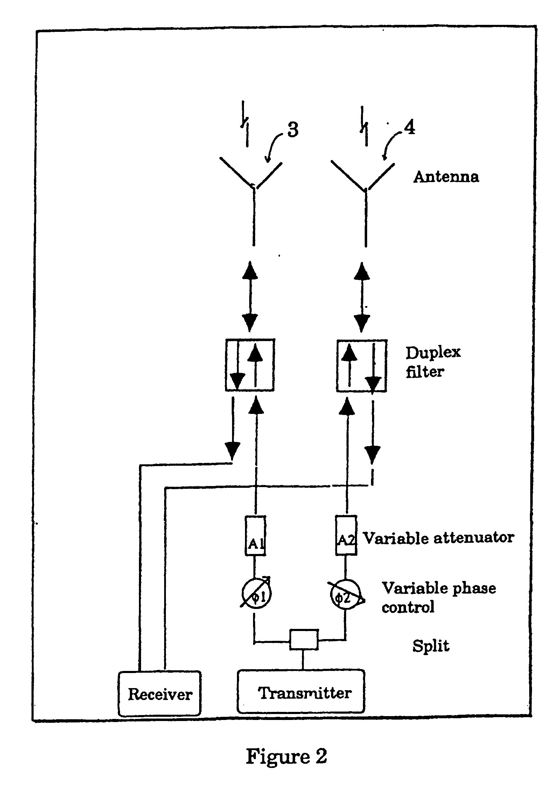

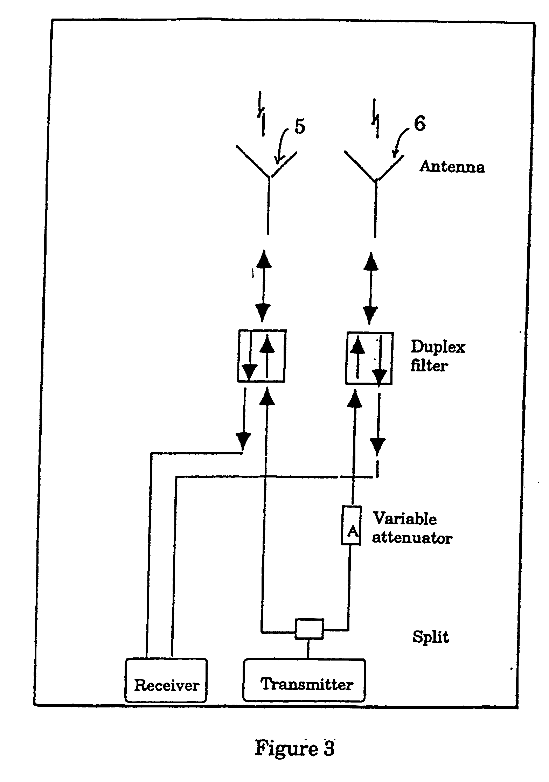

The Figures 2, 3 show examples of two devices which are used to generate fading. The receivers in the Figures 2, 3 utilize the two antennas for antenna diversity. Instead of duplex filter, separate antennas can be used for transmission respective reception. In Figure 2 fading is generated by varying phase and/or amplitude, whereas in Figure 3 fading is generated by only varying the amplitude; this will be described in details in the following.

The invention generates fading on uplink and/or downlink by transmitting on two or more antennas (see Figure 2, 3) acccording to the following, alternative methods which will now be described.

### Method 1

Fading is generated by changing antenna over which transmission is made. The changing of antennas is performed at certain intervals which can be fixed or not fixed. At not fixed intervals, the intervals can either be varied at random or in a deterministic way.

One example of a deterministic method for deciding the changing interval will now be described. Measuring is made of the period time for the fading 1, which period time is compared with the interleaving depth (d). The antenna changing interval is decided so that the period of the generated fading in combination with the not generated fading 1 becomes considerably shorter than the interleaving depth (d). Determination of the changing interval can be made for each individual user.

### Method 2

Fading is generated by varying difference in phase and/or amplitude between the antennas. Ideally the difference in phase should be possible to vary linearly and continuously. In practice it can however be suitable to divide the phase shifts into discrete intervals (simpler implementation).

The time intervals (tphase) elapsing during a 360° phase shift can be determined deterministically. Measuring is made of the period time of the fading 1, which period time is compared with the interleaving depth (d). The time interval (tphase) is determined so that the period of the generated fading in combination with the not generated fading 1 becomes considerably shorter than the interleaving depth (d). Determination of the time interval (tphase) can be made for each individual user, but can also be the same for all users.

The present invention has been used in for instance GSM and in HIPERLAN with very satisfactory result.

For GSM interleaving will give a good gain if the mobile terminal moves with a higher speed than 50 km/h. If we suppose that the mobile terminal moves in an environment without clear view with so called short fading, this means that the fading dips on an average are separated about 0,15 cm. This corresponds to a time interval of about 10 milliseconds between the dips. Let us now suppose that the user of the mobile terminal leaves the car to walk at about 5 km/h. The time intervals between the dips are now about 100 milliseconds on an average, which is more than GSM'S interleaving depth. If we chose tphase to 11 milliseconds then the mobile terminal will experience fading with an average period time as if it was travelling at a rate of 50 km/h.

HIPERLAN has a maximal interleaving depth (d) of about 1 millisecond. If we suppose that the terminal moves at a rate of about 1 m/s, this means that the time intervals between the fading dips on an average is about 50 milliseconds (at the carrier frequency 5 GHz). Consequently the interleaving depth is too small. If one utilizes the invention with the time interval (tphase) less than 1 millisecond, considerably better performance is achieved.

Fading can, as has been mentioned above, be generated by varying the signal amplitude for either one or for all antennas (see Figure 2, 3). Further, the amplitude variation can be combined with phase variation (see Figure 2).

The time interval (tamp) elapsing during the amplitude variation between two local amplitude maxima can be determined. deterministically: Measuring is made of the period time of the fading 1 which can be compared with the interleaving depth (d). The time interval (tamp) is determined so that the period of the generated fading in combination with the not generated fading 1 becomes considerably shorter than the interleaving depth (d). Determination of the time interval (tamp) can be made for each individual user, but can also be the same for all users. The amplitude variation should preferably be made continuously, but can also be made in discrete steps.

A simple but effective embodiment of the invention is that the amplitude variation is made on one of the antennas. The amplitude is varied continuously between a maximum (the same amplitude as of the antenna with constant amplitude) and a minimum, by means of a variable attenuator/amplifier A in one of the antennas (see Figure 3).

The antennas which are utilized to generate fading shall be separated in the same way as if they are only utilized to create antenna diversity, i.e. the antennas shall be as uncorrelated as possible and the average of the antennas shall be as equal as possible.

It should be realized that an alternative to to utilize separate antennas is to use an antenna which comprises two or more antenna elements. This means that the invention utilizes controlling of two or more antenna elements within one and the same antenna.

Generating of fading shall be made in the link direction or link directions which do not utilize antenna diversity. For for instance GSM/DCS1800 generating of fading should be made in downlink. The same antennas for generating of fading are utilized as those at the base station for antenna diversity in uplink. By that a considerably better balance in the link budget between uplink and downlink is achieved (see Figure 2, 3).

As has previously been mentioned, the advantage of the present invention increases the slower the user of the mobile terminal moves. Examples of systems (GSM and DCS1800) have been described which are of great current interest for use of the invention, especially in indoor applications and micro cell applications. These applications of mobile telephony in indoor environments and in micro cell environments are considered to be of very big importance for the future growth of the mobile telephony. The present invention therefore will have an especially great importance due to that one in these applications make very great demands upon quality. This will in the long run also be valid for HIPERLAN.

## Claims

1. Device to reduce the influence of fading in a digital mobile radio communication system utilizing interleaving with restricted interleaving depth, the device being arranged to generate fading on uplink and/or downlink by being arranged to transmit on two or more antennas (3, 4, 5, 6), **characterized in that** the device is arranged to measure the period of the not generated fading (1) and to compare said period with the interleaving depth (d), to change between the antennas (3, 4, 5, 6) for transmission, and to determine a time interval for changing transmitting antennas in such a way that the period of the generated fading in combination with the not generated fading (1) is considerably shorter than said interleaving depth (d).

2. Device according to claim 1, **characterized in that** it is arranged to change between the antennas (3, 4, 5, 6) for transmission with constant or not constant time intervals, and at not constant time intervals is arranged to vary said time intervals at random or in a deterministic way.

3. Device according to claim 1 or 2, **characterized in that** it is arranged to provide a time interval for changing transmitting antennas for each individual user.

4. Device to reduce the influence of fading in a digital mobile radio communication system utilizing interleaving with restricted interleaving depth, the device being arranged to generate fading on uplink and/or downlink by being arranged to transmit on two or more antennas (3, 4, 5, 6), **characterized in that** the device is arranged to measure the period of the not generated fading (1) and to compare said period with the interleaving depth (d), to generate fading by varying the phase of a signal transmitted by one of the antennas (3, 4), or by varying the phase of just any number of signals, which are transmitted by the antennas (3, 4), and to deterministically determine a time interval (tphase) elapsing during a 360° phase shift in such a way that the period of the generated fading in combination with the not generated fading (1) is considerably shorter than the interleaving depth (d).

5. Device according to claim 4, **characterized in that** it is arranged to determine the time interval (tphase) for each individual user.

6. Device to reduce the influence of fading in a digital mobile radio communication system utilizing interleaving with restricted interleaving depth, the device being arranged to generate fading on uplink and/or downlink by being arranged to transmit on two or more antennas (3, 4, 5, 6), **characterized in that** the device is arranged to measure the period of the not generated fading (1) and to compare said period with the interleaving depth (d), to generate fading by varying the amplitude of a signal transmitted by one of the antennas (3, 4, 6) or by varying the amplitude of just any number of signals transmitted by the antennas (3, 4, 6), and to deterministically determine a time interval (tamp) elapsing during the amplitude variation between two local amplitude maxima so that the period of the generated fading in combination with the not generated fading (1) is considerably shorter than the interleaving depth (d).

7. Device according to claim 4 or 6, **characterized in that**, in order to generate fading, it is arranged to vary both amplitude and phase of the signal/signals.

8. Device according to claim 6, **characterized in that** it is arranged to continuously vary the amplitude of the signal between a maximum and a minimum by means of a variable attenuator/amplifier in one of the antennas (6).

9. Device according to any of the claims 1-8, **characterized in that** the antennas (3, 4, 5, 6) utilized to generate fading are separated in the same way as when they are utilized to effect antenna diversity.

10. Device according to claim 9, **characterized in that** the antennas (3, 4, 5, 6) are arranged to be as uncorrelated as possible, and arranged in such a way that their average is as equal as possible.

11. Device according to claim 9 or 10, **characterized in that** it is arranged to utilize an antenna comprising two or more antenna elements, and is arranged to utilize control of two or more antenna elements within one and the same antenna.

12. Device according to any of the claims 9-11, **characterized in that** it generates fading in the link direction or link directions which do not utilize antenna diversity.

13. Device according to claim 12, **characterized in that** it generates fading in downlink at utilization of GSM/DCS1800.

14. Device according to any of the claims 9-13, **characterized in that** it is arranged to utilize the same antennas for generation of fading as those, which are utilized at the base station for antenna diversity in uplink.

15. Method to reduce the influence of fading in a digital mobile radio communication system utilizing interleaving with restricted interleaving depth, fading being generated on uplink and/or downlink by transmission being made on two or more antennas (3, 4, 5, 6), **characterized in that** fading is generated by means of changing with time intervals between antennas (3, 4, 5, 6) over which transmission is made, and that a deterministic determination of the changing interval is effected by a measuring of the period of the not generated fading (1), whereupon said measuring is compared with the interleaving depth (d), at which if said measuring of the period of the not generated fading (1) is bigger than the interleaving depth (d), the time interval for changing between the antennas (3, 4, 5, 6) is determined so that the period of the generated fading in combination with the not generated fading (1) is considerably shorter than said interleaving depth (d).

16. Method to reduce the influence of fading in a digital mobile radio communication system utilizing interleaving with restricted interleaving depth, fading being generated on uplink and/or downlink by transmission being made on two or more antennas (3, 4, 5, 6), **characterized in that** fading is generated by varying the difference in phase between the signals transmitted by the antennas (3, 4), and that a deterministic determination of a time interval (tphase) elapsing during a 360° phase shift is effected by a measuring of the period of the not generated fading (1), whereupon this measuring is compared with the interleaving depth (d), at which if said measuring of the period of the not generated fading (1) is bigger than the interleaving depth (d), the time interval (tphase) is determined so that the period of the generated fading in combination with the not generated fading (1) is considerably shorter than the interleaving depth (d).

17. Method according to claim 16, **characterized in that** determination of tphase is made for each individual user, but can also be the same for all users.

18. Method to reduce the influence of fading in a digital mobile radio communication system utilizing interleaving with restricted interleaving depth, fading being generated on uplink and/or downlink by transmission being made on two or more antennas (3, 4, 5, 6), **characterized in that** fading is generated by varying the signal amplitude of one of the antennas (3, 4, 6) or of all antennas (3, 4, 6), and that a deterministic determination of a time interval (tamp) elapsing during amplitude variations between two local amplitude maxima is effected by a measuring of the period of the not generated fading (1), whereupon this measuring is compared with the interleaving depth (d), at which if this measuring is bigger than the interleaving depth (d), the time interval (tamp) is determined so that the period of the generated fading in combination with the not generated fading (1) is considerably shorter than the interleaving depth (d).

19. Method according to claim 18, **characterized in that** the determination of the time interval (tamp) is made for each individual user, but can also be the same for all users.

20. Method according to claim 19, **characterized in that** the amplitude variation is only made on signal of one of the antennas (6).

## Patentansprüche

1. Vorrichtung zum Verringern des Einflusses von Schwund in einem digitalen Mobilfunk-Kommunikationssystem mit Verschachtelung mit eingeschränkter Verschachtelungstiefe, wobei die Vorrichtung zum Erzeugen von Schwund auf Aufwärts- und/oder Abwärtsstrecke angeordnet ist, indem sie zum Übertragen auf zwei oder mehr Antennen (3, 4, 5, 6) angeordnet ist, **dadurch gekennzeichnet, dass** die Vorrichtung zum Messen der Zeitdauer des nicht erzeugten Schwundes (1) und zum Vergleichen dieser Zeitdauer mit der Verschachtelungstiefe (d) angeordnet ist, zum Wechseln zwischen den Antennen (3, 4, 5, 6) zur Übertragung, und zum Bestimmen eines Zeitintervalls zum Wechseln von Sendeantennen derart, dass die Zeitdauer des erzeugten Schwunds in Verbindung mit dem nicht erzeugten Schwund (1) beträchtlich kürzer als die Verschachtelungstiefe (d) ist.

2. Vorrichtung nach Anspruch 1, **dadurch gekennzeichnet, dass** sie zum Wechseln zwischen den Antennen (3, 4, 5, 6) zur Übertragung mit konstanten oder nicht konstanten Zeitintervallen angeordnet ist, und bei nicht konstanten Zeitintervallen angeordnet ist, diese Zeitintervalle zufallsmäßig oder deterministisch zu variieren.

3. Vorrichtung nach Anspruch 1 oder 2, **dadurch gekennzeichnet, dass** sie zur Bereitstellung eines Zeitintervalls zum Wechseln von Sendeantennen für jeden einzelnen Benutzer angeordnet ist.

4. Vorrichtung zum Verringern des Einflusses von Schwund in einem digitalen Mobilfunk-Kommunikationssystem mit Verschachtelung mit eingeschränkter Verschachtelungstiefe, wobei die Vorrichtung zum Erzeugen von Schwund auf der Aufwärts- und/oder Abwärtsstrecke angeordnet ist, indem sie zum Übertragen auf zwei oder mehr Antennen (3, 4, 5, 6) angeordnet ist, **dadurch gekennzeichnet, dass** die Vorrichtung zum Messen der Zeitdauer des nicht erzeugten Schwundes (1) und zum Vergleichen dieser Zeitdauer mit der Verschachtelungstiefe (d) angeordnet ist, zum Erzeugen von Schwund durch Verändern der Phase eines durch eine der Antennen (3, 4) übertragenen Signals oder durch Verändern der Phase von einer beliebigen Anzahl von Signalen, die von den Antennen (3, 4) übertragen werden, und zur deterministischen Bestimmung eines Zeitintervalls (tphase), das während einer 360°-Phasenverschiebung abläuft, derart, dass die Zeitdauer des erzeugten Schwundes in Verbindung mit dem nicht erzeugten Schwund (1) beträchtlich kürzer als die Verschachtelungstiefe (d) ist.

5. Vorrichtung nach Anspruch 4, **dadurch gekennzeichnet, dass** sie zum Bestimmen des Zeitintervalls (tphase) für jeden einzelnen Benutzer angeordnet ist.

6. Vorrichtung zum Verringern des Einflusses von Schwund in einem digitalen Mobilfunk-Kommunikationssystem mit Verschachtelung mit eingeschränkter Verschachtelungstiefe, wobei die Vorrichtung zum Erzeugen von Schwund auf Aufwärts- und/oder Abwärtsstrecke angeordnet ist, indem sie zum Übertragen auf zwei oder mehr Antennen (3, 4, 5, 6) angeordnet ist, **dadurch gekennzeichnet, dass** die Vorrichtung zum Messen der Zeitdauer des nicht erzeugten Schwundes (1) und zum Vergleichen dieser Zeitdauer mit der Verschachtelungstiefe (d) angeordnet ist, zum Erzeugen von Schwund durch Verändern der Amplitude eines durch eine der Antennen (3, 4, 6) übertragenen Signals oder durch Verändern der Amplitude von einer beliebigen Anzahl von durch die Antennen (3, 4, 6) übertragenen Signalen und zum deterministischen Bestimmen eines Zeitintervalls (tamp), das während der Amplitudenveränderung zwischen zwei örtlichen Amplitudenmaxima abläuft, so dass die zeitdauer des erzeugten Schwundes in Verbindung mit dem nicht erzeugten Schwund (1) beträchtlich kürzer als die Verschachtelungstiefe (d) ist.

7. Vorrichtung nach Anspruch 4 oder 6, **dadurch gekennzeichnet, dass** sie zur Variation von sowohl Amplitude als auch Phase des/der Signals/Signale angeordnet ist um Schwung zu erzeugen.

8. Vorrichtung nach Anspruch 6, **dadurch gekennzeichnet, dass** sie zum fortlaufenden Verändern der Amplitude des Signals zwischen einem Maxima und einem Minimum mittels eines veränderlichen Dämpfungsgliedes/Verstärkers in einer der Antennen (6) angeordnet ist.

9. Vorrichtung nach einem der Ansprüche 1 - 8, **dadurch gekennzeichnet, dass** die zum Erzeugen von Schwund benutzten Antennen (3, 4, 5, 6) auf dieselbe Weise getrennt sind, als wenn sie zur Bewirkung von Antennendiversity benutzt werden.

10. Vorrichtung nach Anspruch 9, **dadurch gekennzeichnet, dass** die Antennen (3, 4, 5, 6) so angeordnet sind, dass sie so unkorreliert wie möglich sind, und so angeordnet sind, dass ihr Mittelwert so gleichwertig wie möglich ist.

11. Vorrichtung nach Anspruch 9 oder 10, **dadurch gekennzeichnet, dass** sie zur Benutzung einer Antenne mit zwei oder mehr Antennenelementen angeordnet ist und angeordnet ist, Steuerung von zwei oder mehr Antennenelementen innerhalb ein und derselben Antenne zu benutzen.

12. Vorrichtung nach einem der Ansprüche 9 - 11, **dadurch gekennzeichnet, dass** sie Schwund in der Streckenrichtung oder den Streckenrichtungen erzeugt, die nicht Antennendiversity benutzen.

13. Vorrichtung nach Anspruch 12, **dadurch gekennzeichnet, dass** sie Schwund auf der Abwärtsstrecke bei Benutzung von GSM/DCS1800 erzeugt.

14. Vorrichtung nach einem der Ansprüche 9 - 13, **dadurch gekennzeichnet, dass** sie zur Verwendung derselben Antennen zur Erzeugung von Schwund wie diejenigen, die an der Basisstation für Antennendiversity auf der Aufwärtsstrecke benutzt werden, angeordnet ist.

15. Verfahren zum Verringern des Einflusses von Schwund in einem digitalen Mobilfunk-Kommunikationssystem mit Verschachtelung mit eingeschränkter Verschachtelungstiefe, wobei Schwund auf Aufwärts- und/oder Abwärtsstrecke durch Durchführung von Übertragung auf zwei oder mehr Antennen (3, 4, 5, 6) erzeugt wird, **dadurch gekennzeichnet, dass** Schwund mittels Umwechseln mit Zeitintervallen zwischen Antennen (3, 4, 5, 6), über die Übertragung durchgeführt wird, erzeugt wird, und dass eine deterministische Bestimmung des Umwechslungsintervalls durch Messung der Zeitdauer des nicht erzeugten Schwundes (1) bewirkt wird, wonach die Messung mit der Verschachtelungstiefe (d) verglichen wird, bei der, wenn die Messung der Zeitdauer des nicht erzeugten Schwundes (1) größer als die Verschachtelungstiefe (d) ist, das Zeitintervall zum Umwechseln zwischen den Antennen (3, 4, 5, 6) so bestimmt wird, dass die Zeitdauer des erzeugten Schwundes in Verbindung mit dem nicht erzeugten Schwund (1) beträchtlich kürzer als diese Verschachtelungstiefe (d) ist.

16. Verfahren zum Verringern des Einflusses von Schwund in einem digitalen Mobilfunk-Kommunikationssystem mit Verschachtelung mit eingeschränkter Verschachtelungstiefe, wobei Schwund auf Aufwärts- und/oder Abwärtsstrecke erzeugt wird, indem Übertragung auf zwei oder mehr Antennen (3, 4, 5, 6) durchgeführt wird, **dadurch gekennzeichnet, dass** Schwund durch Verändern des Phasenunterschiedes zwischen den durch die Antennen (3, 4) übertragenen Signalen erzeugt wird und dass eine deterministische Bestimmung eines während einer 360°-Phasenverschiebung ablaufenden Zeitintervalls (tphase) durch Messen der Zeitdauer des nicht erzeugten Schwundes (1) bewirkt wird, wobei diese Messung mit der Verschachtelungstiefe (d) verglichen wird, bei der, wenn die Messung der Zeitdauer des nicht erzeugten Schwundes (1) größer als die Verschachtelungstiefe (d) ist, das Zeitintervall (tphase) so bestimmt wird, dass die Zeitdauer des erzeugten Schwundes in Kombination mit dem nicht erzeugten Schwund (1) beträchtlich kürzer als die Verschachtelungstiefe (d) ist.

17. Verfahren nach Anspruch 16, **dadurch gekennzeichnet, dass** die Bestimmung von tphase für jeden einzelnen Benutzer durchgeführt wird, aber auch die gleiche für alle Benutzer sein kann.

18. Verfahren zum Verringern des Einflusses von Schwund in einem digitalen Mobilfunk-Kommunikationssystem mit Verschachtelung mit eingeschränkter Verschachtelungstiefe, wobei Schwund auf Aufwärts- und/oder Abwärtsstrecke durch Übertragung auf zwei oder mehr Antennen (3, 4, 5, 6) erzeugt wird, **dadurch gekennzeichnet, dass** Schwund durch Verändern der Signalamplitude von einer der Antennen (3, 4, 6) oder von allen Antennen (3, 4, 6) erzeugt wird, und dass eine deterministische Bestimmung eines während Amplitudenvariationen zwischen zwei örtlichen Amplitudenmaxima ablaufenden Zeitintervalls (tamp) durch eine Messung der Zeitdauer des nicht erzeugten Schwundes (1) bewirkt wird, wonach diese Messung mit der Verschachtelungstiefe (d) verglichen wird, bei der, wenn diese Messung größer als die Verschachtelungstiefe (d) ist, das zeitintervall (tamp) so bestimmt wird, dass die Zeitdauer des erzeugten Schwundes in Verbindung mit dem nicht erzeugten Schwund (1) beträchtlich kürzer als die Verschachtelungstiefe (d) ist.

19. Verfahren nach Anspruch 18, **dadurch gekennzeichnet, dass** die Bestimmung des zeitintervalls (tamp) für jeden einzelnen Benutzer durchgeführt wird, aber auch die gleiche für alle Benutzer sein kann.

20. Verfahren nach Anspruch 19, **dadurch gekennzeichnet, dass** die Amplitudenveränderung nur am Signal von einer der Antennen (6) durchgeführt wird.

## Revendications

1. Dispositif pour réduire l'influence de l'évanouissement dans un système de radiocommunication mobile numérique utilisant un entrelacement avec profondeur d'entrelacement limitée, le dispositif étant agencé pour engendrer un évanouissement sur une liaison montante et/ou une liaison descendante du fait qu'il est prévu pour émettre sur deux antennes ou plus (3, 4, 5, 6), **caractérisé en ce que** le dispositif est agencé pour mesurer la période de l'évanouissement non engendré (1) et comparer cette période à la profondeur d'entrelacement (d), pour effectuer un changement entre les antennes (3, 4, 5, 6) d'émission, et pour déterminer un intervalle de temps pour le changement des antennes d'émission d'une manière telle que la période de l'évanouissement engendré en combinaison avec l'évanouissement non engendré (1) soit beaucoup plus courte que la dite profondeur d'entrelacement (d).

2. Dispositif selon la revendication 1, **caractérisé en ce qu'**il est agencé pour effectuer un changement entre les antennes (3, 4, 5, 6) d'émission, avec des intervalles de temps constants ou non constants et, aux intervalles de temps non constants, il est agencé pour modifier les dits intervalles de temps au hasard ou d'une manière déterministe.

3. Dispositif selon la revendication 1 ou 2, **caractérisé en ce qu'**il est agencé de manière à définir un intervalle de temps pour le changement des antennes d'émission pour chaque utilisateur individuel.

4. Dispositif pour réduire l'influence de l'évanouissement dans un système de radiocommunication mobile numérique utilisant un entrelacement avec profondeur d'entrelacement limitée, le dispositif étant agencé pour engendrer un évanouissement sur une liaison montante et/ou une liaison descendante du fait qu'il est prévu pour émettre sur deux antennes ou plus (3, 4, 5, 6), **caractérisé en ce que** le dispositif est agencé pour mesurer la période de l'évanouissement non engendré (1) et comparer cette période à la profondeur d'entrelacement (d), pour engendrer un évanouissement par modification de la phase d'un signal émis par une des antennes (3, 4) ou par modification de la phase de juste un nombre quelconque de signaux, qui sont émis par les antennes (3, 4), et pour déterminer de façon déterministe un intervalle de temps (tphase) s'écoulant pendant un déphasage de 360 degrés d'une manière telle que la période de l'évanouissement engendré en combinaison avec l'évanouissement non engendré (1) soit beaucoup plus courte que la profondeur d'entrelacement (d).

5. Dispositif selon la revendication 4, **caractérisé en ce qu'**il est agencé pour déterminer l'intervalle de temps (tphase) pour chaque utilisateur individuel.

6. Dispositif pour réduire l'influence de l'évanouissement dans un système de radiocommunication mobile numérique utilisant un entrelacement avec profondeur d'entrelacement limitée, le dispositif étant agencé pour engendrer un évanouissement sur une liaison montante et/ou une liaison descendante du fait qu'il est prévu pour transmettre sur deux antennes ou plus (3, 4, 5, 6), **caractérisé en ce que** le dispositif est agencé pour mesurer la période de l'évanouissement non engendré (1) et comparer cette période à la profondeur d'entrelacement (d), pour engendrer un évanouissement par modification de l'amplitude d'un signal émis par une des antennes (3, 4, 6) ou par modification de l'amplitude de juste un nombre quelconque de signaux émis par les antennes (3, 4, 6), et pour déterminer de façon déterministe un intervalle de temps (tamp) s'écoulant pendant la variation d'amplitude entre deux valeurs maximales d'amplitude locales, de sorte que la période de l'évanouissement engendré en combinaison avec l'évanouissement non engendré (1) soit beaucoup plus courte que la profondeur d'entrelacement (d).

7. Dispositif selon la revendication 4 ou 6, **caractérisé en ce que**, afin d'engendrer un évanouissement, il est agencé pour modifier à la fois l'amplitude et la phase du signal / des signaux.

8. Dispositif selon la revendication 6, **caractérisé en ce qu'**il est agencé pour modifier de façon continue l'amplitude du signal entre une valeur maximale et une valeur minimale, au moyen d'un atténuateur / amplificateur variable dans une des antennes (6).

9. Dispositif selon une quelconque des revendications 1 à 8, **caractérisé en ce que** les antennes (3, 4, 5, 6) utilisées pour engendrer un évanouissement sont séparées de la même façon que lorsqu'elles sont utilisées pour effectuer une diversité d'antenne.

10. Dispositif selon la revendication 9, **caractérisé en ce que** les antennes (3, 4, 5, 6) sont agencées de manière à avoir aussi peu de corrélation que possible et elles sont agencées d'une manière telle que leur moyenne est aussi égale que possible.

11. Dispositif selon la revendication 9 ou 10, **caractérisé en ce qu'**il est agencé pour utiliser une antenne comprenant deux éléments d'antenne ou plus, et il est agencé pour utiliser une commande de deux éléments d'antenne où plus dans une seule et même antenne.

12. Dispositif selon une quelconque des revendications 9 à 11, **caractérisé en ce qu'**il engendre un évanouissement dans la direction de liaison ou les directions de liaison, qui n'utilisent pas une diversité d'antenne.

13. Dispositif selon la revendication 12, **caractérisé en ce qu'**il engendre un évanouissement dans la liaison descendante dans le cas d'utilisation de GSM/DCS 1800.

14. Dispositif selon une quelconque des revendications 9 à 13, **caractérisé en ce qu'**il est agencé pour utiliser les mêmes antennes pour génération d'évanouissement que celles qui sont utilisées à la station de base pour une diversité d'antenne dans une liaison montante.

15. Procédé pour réduire l'influence de l'évanouissement dans un système de radiocommunication mobile numérique utilisant un entrelacement avec profondeur d'entrelacement limitée, un évanouissement étant engendré sur une liaison montante et/ou une liaison descendante par une émission effectuée sur deux antennes ou plus (3, 4, 5, 6), **caractérisé en ce qu'**un évanouissement est engendré par changement avec intervalles de temps entre les antennes (3, 4, 5, 6) sur lesquelles l'émission est effectuée, et **en ce qu'**une détermination de façon déterministe de l'intervalle de changement est effectuée par une mesure de la période de l'évanouissement non engendré (1), après quoi la dite mesure est comparée à la profondeur d'entrelacement (d), de sorte que, si la dite mesure de la période de l'évanouissement non engendré (1) est plus grande que la profondeur d'entrelacement (d), l'intervalle de temps pour changement entre les antennes (3, 4, 5, 6) est déterminé de sorte que la période de l'évanouissement engendré en combinaison avec l'évanouissement non engendré (1) soit beaucoup plus courte que la dite profondeur d'entrelacement (d).

16. Procédé pour réduire l'influence de l'évanouissement dans un système de radiocommunication mobile numérique utilisant un entrelacement avec profondeur d'entrelacement limitée, un évanouissement étant engendré sur une liaison montante et/ou une liaison descendante par émission effectuée sur deux antennes ou plus (3, 4, 5, 6), **caractérisé en ce qu'**un évanouissement est engendré par modification de la différence de phase entre les signaux émis par les antennes (3, 4), et **en ce qu'**une détermination de façon déterministe d'un intervalle de temps (tphase) qui s'écoule pendant un changement de phase de 360 degrés est effectuée par une mesure de la période de l'évanouissement non engendré (1), après quoi cette mesure est comparée à la profondeur d'entrelacement (d) de sorte que, si la dite mesure de la période de l'évanouissement non engendré (1) est plus grande que la profondeur d'entrelacement (d), l'intervalle de temps (tphase) est déterminé d'une manière telle que la période de l'évanouissement engendré en combinaison avec l'évanouissement non engendré (1) soit beaucoup plus courte que la profondeur d'entrelacement (d).

17. Procédé selon la revendication 16, **caractérisé en ce que** la détermination de tphase est effectuée pour chaque utilisateur individuel, mais peut également être la même pour tous les utilisateurs.

18. Procédé pour réduire l'influence de l'évanouissement dans un système de radiocommunication mobile numérique utilisant un entrelacement avec profondeur d'entrelacement limitée, un évanouissement étant engendré sur une liaison montante et/ou descendante du fait que l'émission est effectuée sur deux antennes ou plus (3, 4, 5, 6), **caractérisé en ce qu'**un évanouissement est engendré par modification de l'amplitude de signal d'une des antennes (3, 4, 6) ou de toutes les antennes (3, 4, 6), et **en ce qu'**une détermination de façon déterministe d'un intervalle de temps (tamp) qui s'écoute pendant les variations d'amplitude entre deux valeurs maximales. d'amplitude locales est effectuée par une mesure de la période de l'évanouissement non engendré (1), après quoi cette mesure est comparée à la profondeur d'entrelacement (d), de sorte que, si cette mesure est plus grande que la profondeur d'entrelacement (d), l'intervalle de temps (tamp) est déterminé de sorte que la période de l'évanouissement engendré en combinaison avec l'évanouissement non engendré (1) soit beaucoup plus courte que la profondeur d'entrelacement (d).

19. Procédé selon la revendication 18, **caractérisé en ce que** la détermination de l'intervalle de temps (tamp) est effectuée pour chaque utilisateur individuel mais peut également être la même pour tous les utilisateurs.

20. Procédé selon la revendication 19, **caractérisé en ce que** la variation d'amplitude est seulement effectuée sur le signal d'une des antennes (6).
